# EUROPÄISCHE PATENTSCHRIFT

(11) **EP 1 557 342 B1**
(45) Veröffentlichungstag und Bekanntmachung des Hinweises auf die Patenterteilung: **06.02.2008**
(21) Anmeldenummer: 04029503.2
(22) Anmeldetag: 14.12.2004
(51) Int. Cl.: B62D 29/00, B62D 27/02, B62D 25/00

(54) **Baugruppe einer Kraftfahrzeugkarosserie in Schalenbauweise**
Structural assembly of shell construction for motor vehicle body
Construction en coquille pour ensemble de carrosserie de véhicule automobile

(30) Priorität: 22.01.2004 DE 102004003190
(43) Veröffentlichungstag der Anmeldung: 27.07.2005
(73) Patentinhaber: Bayerische Motoren Werke Aktiengesellschaft, 80809 München (DE)
(72) Erfinder: Schupp, Alexander, 80801 München (DE); Urbanski, Guido, 84160 Frontenhausen (DE); Lang, Hans-Peter, 84453 Mühldorf (DE)

(56) Entgegenhaltungen:
- EP-A- 1 454 819
- DE-A1- 3 635 317
- DE-A1- 4 213 130
- US-B1- 6 672 642

## Beschreibung

Die Erfindung betrifft eine Baugruppe einer Kraftfahrzeugkarosserie in Schalenbauweise mit einer Innen- und einer Außenschale nach dem Oberbegriff des Patentanspruchs 1. Die DE 4 213 130 A1 offenbart eine solche Baugruppe.

Allgemein bekannt sind Baugruppen einer Fahrzeugkarosserie in Blechschalenbauweise mit einer Innen- und einer Außenschale. Typische solche Baugruppen sind Schweller, B-Säulen, Dachseitenrahmen, Türen oder Klappen. An solche Baugruppen werden oft relativ hohe Anforderungen bezüglich der Steifigkeit und Festigkeit gestellt. Aufgrund der komplexen Formgebung der Innen- und der Außenschale können aber nur relativ dünne Blechdicken verwendet werden, da bei größeren Blechdicken beim Tiefziehen der Schalen Risse entstehen würden. Um dennoch die Steifigkeits- und Festigkeitsanforderungen erfüllen zu können, werden daher häufig zusätzliche Verstärkungsbleche mit der Innen- und / oder Außenschale verbunden. Dies erhöht das Gewicht der Baugruppe erheblich.

Aufgabe der Erfindung ist es, eine Baugruppe einer Kraftfahrzeugkarosserie in Schalenbauweise so zu versteifen, dass das Gesamtgewicht der Baugruppe möglichst gering ist.

Diese Aufgabe wird mit einer Baugruppe einer Kraftfahrzeugkarosserie in Schalenbauweise mit den Merkmalen des Patentanspruchs 1 gelöst.

Erfindungsgemäß ist eine Baugruppe einer Kraftfahrzeugkarosserie in Blechschalenbauweise mit einer Außen- und einer Innenschale mit zumindest einem Verstärkungsteil verstärkt. Das Verstärkungsteil besteht aus einem faserverstärkten Kunststoff und ist flächig mit einer der Schalen verklebt. Die nach Art. 54(3) EPÜ genannte frühere Schrift EP 1 454 819 A beschreibt eine solche Baugruppe. Typische faserverstärkte Kunststoffe sind beispielsweise glasfaser- oder aramidfaserverstärkte Kunststoffe, wie sie mannigfach auf dem Markt verfügbar sind. Besonders geeignet sind kohlenfaserverstärkte Kunststoffe (CFK). Kohlenfaser-verstärkte Kunststoffe sind billiger als aramidfaserverstärkte Kunststoffe, weisen aber ebenfalls sehr hohe Festigkeiten und Steifigkeiten bei einem relativ gesehen sehr geringen Gewicht auf.

Das zumindest eine Verstärkungsteil aus dem faserverstärkten Kunststoff ist flächig mit der Innen- oder Außenschale verklebt. Dadurch erreicht die Baugruppe in Schalenbauweise die erforderliche Steifigkeit und Festigkeit. Das Gewicht der Baugruppe ist dabei geringer, als bei einer Baugruppe mit gleicher Festigkeit und Steifigkeit mit Blechschalen mit höheren Blechdicken oder als bei einer Baugruppe mit zusätzlichen Verstärkungsbauteilen aus Blech. Trotzdem weist die erfindungsgemäße Baugruppe eine zumindest gleich hohe spezifische Energieaufnahme bei einem Unfall des Fahrzeugs auf. Durch die flächige Verklebung ist die darunter liegende Innen- oder Außenschale zudem vor Korrosion geschützt. Bei Fahrzeugen, die nur mit einer geringen Stückzahl pro Jahr produziert werden, kann ein Verstärkungsteil aus einem faserverstärkten Kunststoff zudem die billigere Lösung gegenüber einem Verstärkungsteil aus einem Blech sein, für das ein eigenes, teures Blechumformwerkzeug erforderlich ist. Dies kann insbesondere für Fahrzeugvarianten von Vorteil sein, die gegenüber der Standardvariante höhere Steifigkeitsanforderungen erfüllen müssen. So muss beispielsweise der Schweller eines Cabriolets eine höhere Steifigkeit als die dazugehörige Limousine aufweisen. Durch den Einsatz von Verstärkungsteilen aus faserverstärkten Kunststoffen beim Cabriolet können dieselben Innen- und Außenschalen wie bei der Limousine verwendet werden.

Das Verstärkungsteil weist zumindest auf der zu verklebenden Seite ein Abreißgewebe auf. Abreißgewebe werden als letzte Lage in das Verstärkungsteil mit einlaminiert. Das Abreißgewebe schützt die Klebeflächen vor Verschmutzung und wird vor dem Verkleben abgezogen. Die zu verklebende Innen- oder Außenschale aus Blech wird meist an ihrer Klebefläche relativ schmutzig sein. So haften häufig noch Schmiermittel vom Tiefziehprozess an der Schale. Daher wird bevorzugt die Klebefläche der Schale vor dem Verkleben gereinigt. Je nach Klebstoff kann die Festigkeit der Verklebung zudem noch deutlich verbessert werden, wenn die Klebefläche nach dem Reinigen noch zusätzlich mit einem Aktivator und / oder Primer vorbehandelt wird.

Die eigentliche Verklebung erfolgt bevorzugt mit einem Epoxidklebstoff. Der Klebstoff ist so konzipiert, dass dieser über die Ofenprozesse beim Lackieren der Karosserie ausgehärtet wird. Deshalb reißtdie Verklebung auch bei den hohen Temperaturen nicht, die bei den Lackierprozessen der Karosserie in der Baugruppe herrschen. 2K-Klebstoffe dagegen härten so schnell aus, dass sie bis zum Lackierprozess bereits vollständig ausgehärtet sind, sodass sie während der Lackierprozesse reißen würden. Zusätzlich kann es nötig sein, die verklebten Bauteile durch ein zweites Fügeverfahren mechanisch zu fixieren. Das Fügeverfahren ist angepasst an die Hybridbauweise. Im besten Fall benötigt es nur einseitige Zugänglichkeit und nur einen Prozessschritt, wie es beispielsweise beim Nieten der Fall ist.

Häufig weist die zu verklebende Schale ein oder mehrere Ausnehmungen auf, die später zu Befestigung von weiteren Bauteilen, wie beispielsweise Verkleidungsbauteilen, dienen. Deshalb ist es wichtig, dass der Bauraum unmittelbar hinter der Ausnehmung und die Ausnehmung selber beim Verkleben nicht versehentlich mit Klebstoff verschlossen werden. Dazu werden bevorzugt vor dem Verkleben Stopfen in die Ausnehmungen gesteckt oder Schaumstoffformteile als Dichtringe um die Ausnehmung angebracht, die den benötigten Bauraum beim Verkleben freihalten. Nach dem Verkleben werden diese Stopfen oder Schaumstoffformteile dann einfach entfernt.

Weitere vorteilhafte Ausgestaltungen sind Gegenstand von Unteransprüchen.

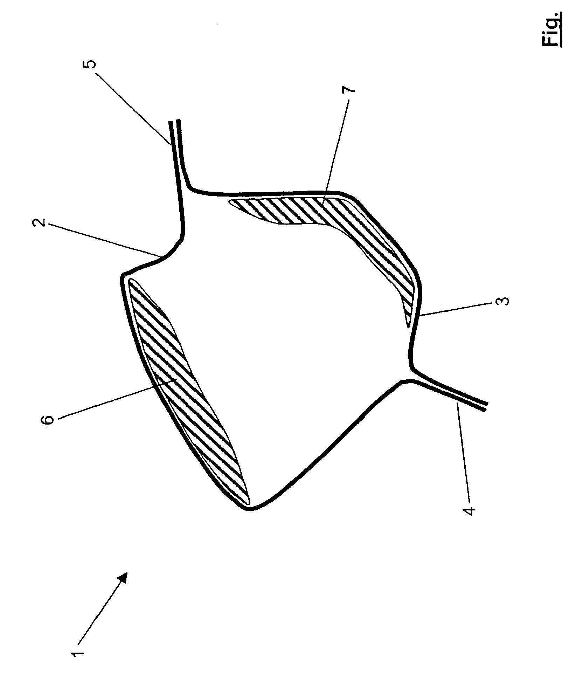

In der Zeichnung ist ein Ausführungsbeispiel der Erfindung dargestellt, anhand dessen die Erfindung im folgenden näher beschrieben wird. Die einzige Figur zeigt in schematischer Darstellungsweise einen Schnitt durch einen Dachseitenrahmen einer Kraftfahrzeugkarosserie.

In der Figur ist ein Dachseitenrahmen 1 einer Karosserie eines Personenkraftwagens dargestellt. Der Dachseitenrahmen 1 besteht aus einer Außenschale 2 und einer Innenschale 3 aus Stahlblech, die über einen seitlichen und einen oberen Verbindungsflansch 4 und 5 miteinander verbunden sind. Zur Versteifung sind sowohl in die Außenschale 2 als auch in die Innenschale 3 längliche Verstärkungsteile 6 und 7 aus CFK flächig eingeklebt. Dadurch erhöht sich die Festigkeit und Steifigkeit des Dachseitenrahmens 1 erheblich. Das Gewicht des Dachseitenrahmens 1 ist deutlich geringer, als wenn er anstelle der CFK-Verstärkungsteile 6 und 7 mit zusätzlichen Stahlblechen verstärkt worden wäre.

Der Lagenaufbau und der Faservolumengehalt der CFK-Verstärkungsteile 6 und 7 ist den Anforderungen entsprechend dimensioniert. Alle Ränder der Verstärkungsteile 6 und 7 sind geschäftet, d. h. sie laufen mit einer Schräge zur Außen- bzw. zur Innenschale 2 bzw. 3 hin aus. Dadurch werden Spannungskonzentrationen in den Randbereichen vermieden. Zudem sind alle Ränder versiegelt. Die Versiegelung stellt sicher, dass auch an den Rändern keine Fasern aus den Verstärkungsteilen 6 und 7 herausschauen, sondern dass sie vollständig in den Verstärkungsteilen 6 und 7 eingebettet sind. Zur Versiegelung kann auf die Ränder eine zusätzliche Harzschicht aufgetragen werden.

Zum eigentlichen Verkleben der Verstärkungsteile 6 und 7 mit der Außen- bzw. Innenschale 2 bzw. 3 wird die jeweilige Blechschale 2, 3 in eine Aufnahmevorrichtung eingelegt. Anschließend wird die Klebefläche der Blechschale 2, 3 gereinigt. In Ausnehmungen in der Blechschale 2, 3 werden Stopfen aus Schaumstoff gesteckt, damit die Ausnehmungen, die später zur Befestigung anderer Bauteile dienen, nicht mit Klebstoff versehentlich verschlossen werden.

Die CFK-Verstärkungsteile 6 und 7 weisen vor dem Verkleben zumindest an den Klebeflächen ein sogenanntes Abreißgewebe auf. Diese Abreißgewebe sind als letzte Lage in die Verstärkungsteile 6, 7 mit einlaminiert. Jetzt unmittelbar vor dem Verkleben werden das Abreißgewebe von dem zu verklebenden Verstärkungsteil 6, 7 abgezogen. Dadurch entsteht eine relativ saubere Klebefläche auf dem Verstärkungsteil 6, 7, sodass eine klebefähige Oberfläche entsteht. Auf diese Klebefläche des Verstärkungsteils 6, 7 wird nun ein Epoxidklebstoff appliziert. Dabei müssen die Prozessparameter, wie Muster des Auftrags der Klebstoffraupe und Geometrie der Klebstoffraupe, genau eingehalten werden. Anschließend wird das Verstärkungsteil 6, 7 mit der Blechschale 2, 3 verklebt und das Verstärkungsteil 6, 7 in der Aufnahmevorrichtung gespannt. Dabei wird die Kleberaupe gequetscht. Um Taktzeit zu sparen, können die Bauteile beim Fügen erwärmt werden.

Anschließend werden die miteinander verklebten Teile in einem Ofen mehrstufig erwärmt. Dabei verringert sich die Viskosität des Klebstoffs, sodass er sich leichter flächig verteilen kann. Dabei fixieren Federspanner das Verstärkungsteil 6, 7 in der Blechschale 2, 3 und unterstützen gleichzeitig den Klebstoffverteilungsprozess, sowie die Einhaltung der Höhe des Klebstoffspaltes. Später kann anhand des sichtbaren seitlichen Austritts des Klebstoffs die Qualität der Verklebung überprüft werden. Außerdem dient die Erwärmung im Ofen zur vollständigen Aushärtung des Klebstoffs, sodass die verklebten Bauteile lagerbeständig sind. Zuletzt werden die Außenschale 2 mit ihrem eingeklebten Verstärkungsteil 6 und die Innenschale 3 mit ihrem eingeklebten Verstärkungsteil 7 miteinander zum fertigen Dachseitenrahmen 1 verbunden.

Zusätzlich zur Verklebung können die Verstärkungsteile 6 und 7 mit den Blechschalen 2 und 3 unmittelbar nach dem Verkleben und Verquetschen (evtl. im noch warmen Zustand des Klebstoffs) durch ein zweites Fügeverfahren (z. B. Nieten) mechanisch verbunden werden. Die mechanische Verbindung stellt zum einen eine genaue Fixierung der verklebten und noch nicht ausgehärteten Bauteile zueinander dar, zum anderen können damit auftretende Spannungen auf Grund von unterschiedlichen Wärmeausdehnungskoeffizienten der Verstärkungsteile 6, 7 und der Blechschalen 2, 3 in weiteren Ofenprozessen aufgefangen werden und damit eine Schädigung der Verklebung vermieden werden. Die Auswahl bzw. der Abstand der Fixierpunkte muss dabei bauteilabhängig festgelegt werden.

## Patentansprüche

1. Baugruppe einer Kraftfahrzeugkarosserie in Schalenbauweise mit einer Außen- und einer Innenschale (2 und 3), die mit zumindest einem Verstärkungsteil (6, 7) verstärkt ist, **dadurch gekennzeichnet, dass** das Verstärkungsteil aus einem faserverstärkten Kunststoff besteht und flächig mit einer der Schalen (2, 3) verklebt ist, und dass das Verstärkungsteil (6, 7) vor dem Verkleben zumindest auf der zu verklebenden Seite ein Abreißgewebe aufweist.

2. Baugruppe nach Anspruch 1, **dadurch gekennzeichnet, dass** das Verstärkungsteil (6, 7) aus einem kohlenfaserverstärkten Kunststoff besteht.

3. Baugruppe nach Anspruch 2, **dadurch gekennzeichnet, dass** das Verstärkungsteil (6, 7) geschäftete und / oder versiegelte Schnittkanten aufweist.

4. Baugruppe nach einem der vorhergehenden Ansprüche, **dadurch gekennzeichnet, dass** das Verstärkungsbauteil (6, 7) mit einem Epoxidklebstoff flächig mit der Schale (2, 3) verklebt ist.

5. Baugruppe nach einem der vorhergehenden Ansprüche, **dadurch gekennzeichnet, dass** die Klebefläche der Schale (2, 3) vor dem Verkleben gereinigt und gegebenenfalls aktiviert wird.

6. Baugruppe nach einem der vorhergehenden Ansprüche, **dadurch gekennzeichnet, dass** der Bauraum unmittelbar hinter zumindest einer Ausnehmung in der Schale (2, 3) beim Verkleben durch Stopfen oder Schaumstoffformteile von Klebstoff freigehalten wird.

7. Baugruppe nach einem der vorhergehenden Ansprüche, **dadurch gekennzeichnet, dass** die Baugruppe ein Schweller, eine B-Säule, ein Dachseitenrahmen, eine Tür oder Klappe ist.

## Claims

1. A car body sub-assembly in stressed-skin construction comprising an outer skin (2) and an inner skin (3) reinforced by at least one reinforcing part (6, 7), **characterised in that** the reinforcing part comprises of a fibre-reinforced plastics material and is close-fittingly stuck to one of the skins (2, 3) and the reinforcing part (6, 7) before being stuck has at least one tear-off fabric on the side for sticking.

2. A sub-assembly according to claim 1, **characterised in that** the reinforcing part (6, 7) is made of a carbon fibre-reinforced plastics material.

3. A sub-assembly according to claim 2, **characterised in that** the reinforcing part (6, 7) has butt-jointed and/or sealed cut edges.

4. A sub-assembly according to any of the preceding claims, **characterised in that** the reinforcing part (6, 7) is close-fittingly stuck to the skin (2, 3) by an epoxy adhesive.

5. A sub-assembly according to any of the preceding claims, **characterised in that** the adhesive surface of the skin (2, 3) is cleaned before sticking and activated if required.

6. A sub-assembly according to any of the preceding claims, **characterised in that** during the sticking process, the space immediately behind at least one recess in the skin (2, 3) is kept free of adhesive by plugging or by moulded foam parts.

7. A sub-assembly according to any of the preceding claims, **characterised in that** it is a sillboard, a B-column, a roof side frame, a door or a flap.

## Revendications

1. Module de carrosserie de véhicule à construction en coquille comportant une coquille extérieure et une coquille intérieure (2, 3), renforcées par au moins une pièce de renforcement (6, 7),
**caractérisé en ce que**
la pièce de renforcement est en matière plastique renforcée par des fibres et est collée en surface à l'une de coquilles (2, 3) et la pièce de renforcement (6, 7) présente avant son collage, un tissu arrachable sur le côté à coller.

2. Module selon la revendication 1,
**caractérisé en ce que**
la pièce de renforcement (6, 7) est en matière plastique renforcée par des fibres de carbone.

3. Module selon la revendication 2,
**caractérisé en ce que**
la pièce de renforcement (6, 7) présente des arêtes de coupe étagées et/ou scellées.

4. Module selon l'une des revendications précédentes,
**caractérisé en ce que**
la pièce de renforcement (6, 7) est collée en surface à la coquille (2, 3) par une colle époxyde.

5. Module selon l'une des revendications précédentes,
**caractérisé en ce que**
la surface de collage de la coquille (2, 3) est nettoyée avant le collage et le cas échéant elle est activée.

6. Module selon l'une des revendications précédentes,
**caractérisé en ce que**
le volume directement derrière une cavité des coquilles (2, 3) est protégé contre la colle par des bouchons ou des pièces de mousse, pendant le collage.

7. Module selon l'une des revendications précédentes,
**caractérisé en ce que**
le module est un seuil, une colonne B, un châssis latéral de pavillon, une porte ou un volet.
